# EUROPEAN PATENT SPECIFICATION

(11) **EP 1 601 988 B1**
(45) Date of publication and mention of the grant of the patent: **18.04.2007**
(21) Application number: 04713143.8
(22) Date of filing: 20.02.2004
(51) Int. Cl.: G01S 5/02

(54) **OBJECT LOCATION**
OBJEKTPOSITIONSBESTIMMUNG
LOCALISATION D'OBJETS

(30) Priority: 04.03.2003 GB 0304861
(43) Date of publication of application: 07.12.2005
(73) Proprietor: Koninklijke Philips Electronics N.V., 5621 BA Eindhoven (NL)
(72) Inventor: ROSENFELD, Josi, Redhill, Surrey RH1 5HA (GB)
(74) Representative: Damen, Daniel Martijn
(86) International application number: PCT/IB2004/000558
(87) International publication number: WO 2004/079389

(56) References cited:
- WO-A-02/096148
- US-A- 6 161 018
- US-B1- 6 393 294
- US-B2- 6 522 296

## Description

The invention relates to a positioning method and to a radio system, radio station and computer program for use in locating an object, particularly, but not exclusively, in a building by means of radio frequency signals.

A number of positioning systems have been proposed to locate the position of a radio transmitter or receiver.

A simple approach is to measure the distance of a receiver from a transmitter by measuring at the receiver the strength of a signal transmitted from the transmitter. By using an estimate of the attenuation of the signal strength with distance, and knowing the transmitted power, the received signal strength can be converted into a range measurement.

The position of the receiver can be determined by using signals transmitted from a number of transmitters to the receiver, determining the corresponding distance from each transmitter to the receiver, and then locating the receiver from this information, for example by using trilateration.

When used indoors, this method has a number of inconveniences. Firstly, the attenuation of a radio signal with distance is hard to estimate indoors, since it depends on the number of absorbers and reflectors such as walls, people, and other highly variable quantities. Systems which use empirical methods, for example using measured attenuation values, to convert received signal strength into range measurements can therefore work better than those that simply calculate range from the equation governing radio transmission in free space. However, measured signal strength values can deviate significantly from those estimated empirically, for example caused by people or other objects moving about the building or fast fading effects which cause nulls in signal reception. Therefore, the method is not very accurate.

Secondly, the need for more than one transmitter is inconvenient.

Some of the difficulties with the above method in buildings can be addressed using a system in which distance is measured by measuring the time of flight that signals take when they are transmitted from transmitter to receiver. In a simple arrangement, a correlator is used to maximise the correlation between transmitted signal delayed by a variable delay and the received signal. The variable delay that maximises the correlation is taken to be the time of flight of the signal. By using a number of transmitters, the position of the receiver can be calculated as above using trilateration.

However, this approach does not solve the problem of multiple transmitters. Indeed, as well as the three unknown position coordinates needed to locate a receiver in space, the time offset between the internal clocks in both the transmitter and the receiver is also normally unknown, so there are four unknowns to be determined. Therefore, in general four or more transmitters are needed to locate the receiver in space, which remains a significant inconvenience.

The other difficulty with such systems when used in indoor environments is that the receiver can receive a number of signal components corresponding to reflections off a variety of reflectors in the indoor environment. This can make it difficult to identify the direct line of sight signal received in the receiver. The effects of reflections are known as multi-path effects and they are particularly significant for use indoors. Indeed, the direct line of sight signal may be completely blocked, and it is very difficult indeed to estimate the time of flight of a line of sight signal in the absence of the direct line of sight component.

Therefore, radio positioning in buildings is fraught with difficulty.

International Patent Application WO 02/096148 A1 discloses a method of locating a terminal in a communication network, in which the terminal transmits a signal which is received by a base station. The received signal is compared to a data base of stored profiles of signals received from signals transmitted from various possible locations, and the location of the terminal is identified from the stored profile that best approximates the profile of the received signal.

A known example of a positioning system for use indoors is the system described in "RADAR: an in-building RF-based user location and tracking system", Bahl et al, Proceedings of INFOCOM 2000, Tel Aviv, March 2000. However, this system only claims a median error distance of about 3m, about the size of a room.

Thus there remains a need for a positioning system and method suitable for use in a building, and particularly for a positioning system and method that can function even when the direct line of sight signal is blocked.

According to a first aspect of the invention, there is provided a positioning method of a radio station, the method comprising:
providing a parameter database including expected signal parameters of backscattered signals as a function of position;
providing an object database including expected signal parameters of backscattered signals from a plurality of objects;
transmitting a location signal from the radio station so that it undergoes multipath reflection before being received back at the radio station as a received signal;
measuring predetermined features of the received signal;
comparing the predetermined features of the received signal with the stored data in the parameter database to find the best match and accordingly the position of the radio station;
identifying differences between the predetermined features of the received signal and that expected from the stored data in the parameter database; and
comparing the differences with the stored data in the object database to find any matches meeting a predetermined fit criterion and accordingly to identify objects located in the vicinity of the radio station.

By first finding the location and then identifying differences, the ability to locate nearby objects is improved. The difference information provides knowledge of other reflectors in the environment not accounted for in the building model. This can be used to build up a more accurate map of the indoor environment than that originally used, so that the user knows his or her position with respect to furniture. The information also allows the receiver to distinguish between fixed objects (such as walls) and movable objects (such as people) which may be very useful in some applications.

The method has a number of benefits over prior approaches. Firstly, it does not require multiple transmitters and receivers. Secondly, the method does not require the reception of a direct line of sight signal sent from transmitter to receiver to obtain a relative position measurement between two radios.

The invention uses a backscattered signal for location, i.e. a signal that is transmitted from the radio station whose position is to be measured. The invention has realised that this is more reliable since the use of a signal that is transmitted from a remote transmitter might be blocked or affected by intervening walls or other objects.

The predetermined features may be the amplitude, phase and delay of components of the transmitted signal received at the receiver. The components will correspond to reflections off a variety of walls, items of furniture and other items. It may not be necessary to store or measure the amplitude, phase and delay of each of the components. Instead, only the data for the more significant components need to be stored. During the measurement step, only the more significant components then need to be measured. The more significant data may be the data relating to the strongest signals.

The number of components that need to be stored for each area may be predetermined to be a value sufficient to distinguish between the various areas. One component is generally not enough, so a predetermined plurality of components needs to be treated. For example, the number of components measured and the number of components stored may be five or greater, preferably ten or greater.

In alternative embodiments, the predetermined features may be the received power of the received signal as a function of time, the power delay profile. This method can avoid the need for software in the receiving device to calculate the amplitude of the components; such software can be complicated and requires significant processing power which may not be convenient or available in small or portable devices.

The invention is applicable in a number of scenarios.

The invention is particularly applicable to systems having a pair of radio stations in communication with another. In this case, in preferred embodiments, after locating the area that gives the best match, one or both of the stations transmit its location to the other station as an information signal. This can use the same frequency or frequency band as the location signal - indeed, the signal can even be used as a location signal.

Thus, instead of just obtaining a relative measurement of the positions of the two radios, their absolute measurements are determined.

In embodiments, the frequency band used for the transmission of the information signal is a lower frequency band, which is less likely to be absorbed by materials other than metal reflectors.

Preferably, the method also includes analysing the received radio signal to determine the objects in the vicinity of the receiver.

In embodiments, the receiver has multiple antennas and the back-scattered signal not only measures the reflectivity and distance of local objects but also their size and shape, and compares this with the size shape and reflectivity of typical indoor objects.

In preferred embodiments, the user locates the radio station close to various objects in the indoor environment. A signal is transmitted, and the reflectivity, size and shape information is measured for each of the objects. The user inputs the name of the object. In this way, a database of objects, their names and their reflectivity patterns is built up.

The system can then match the observed signal with the parameters to enable the closest local objects to be determined.

In alternative embodiments, predetermined expected parameters are stored for typical objects. The transmitter sends out a signal and the resulting received signal is compared with that expected for a plurality of typical objects to find the best match.

In a further aspect, the invention relates to a radio station comprising: at least one antenna; a transceiver; a processor; and a memory storing a parameter database including expected signal parameters of backscattered signals as a function of position within the building; and providing an object database including expected signal parameters of backscattered signals from a plurality of objects, wherein the memory includes code arranged to cause the radio station: to transmit a location signal from the transmitter so that it undergoes multipath reflection before being received at the receiver as a received signal; to measure predetermined features of the received signal at the receiver; to compare the predetermined features of the received signal with the stored data in the parameter database to find the best match and accordingly the position of the radio station; to identify differences between the predetermined features of the received signal and that expected from the stored data in the parameter database; and to compare the differences with the stored data in the object database to find any good matches and accordingly to identify objects located in the vicinity of the radio station.

Preferably the radio station has a plurality of antennas for transmitting simultaneously multiple radio signals.

The invention also relates to a radio system comprising a plurality of such radio stations arranged to communicate with one another.

For a better understanding of the invention, embodiments will now be described, purely by way of example, with reference to the accompanying drawings, in which:
Figure 1 shows a system according to a first embodiment of the invention;
Figure 2 shows a plan of a building in which the system of Figure 1 is being used;
Figure 3 shows a plan of part of the building of Figure 2; and
Figure 4 is a flow chart of the operation of the embodiment of Figure 1.

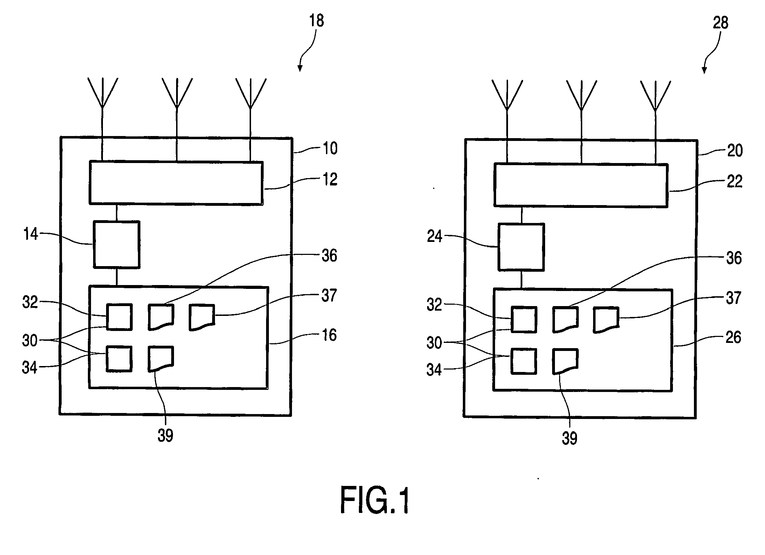

A system according to a first embodiment has a first radio station 10 (Figure 1) with a transceiver 12, a processor 14 and a memory 16 as well as multiple antennas 18. The system also has a second radio station 20 with a transceiver 22, controller 24, memory 26 and multiple antennas 28. Both the first and second radio stations are portable.

Each of the first and second radio stations contains code 30 stored in memory 16,26 for causing the radio stations to carry out the steps set out below. The code 30 includes a ray-tracing simulator 32 for building up a parameter database 36 and an operation controller 34 for controlling operation of the radio stations.

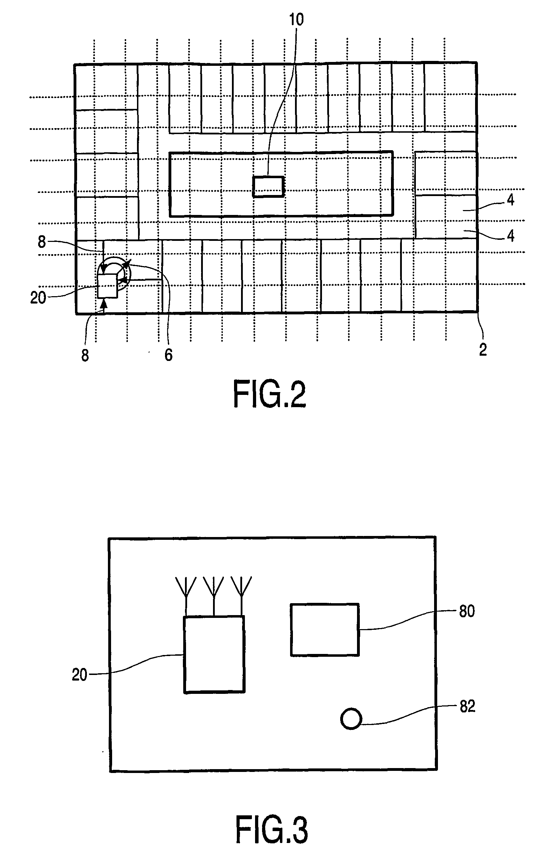

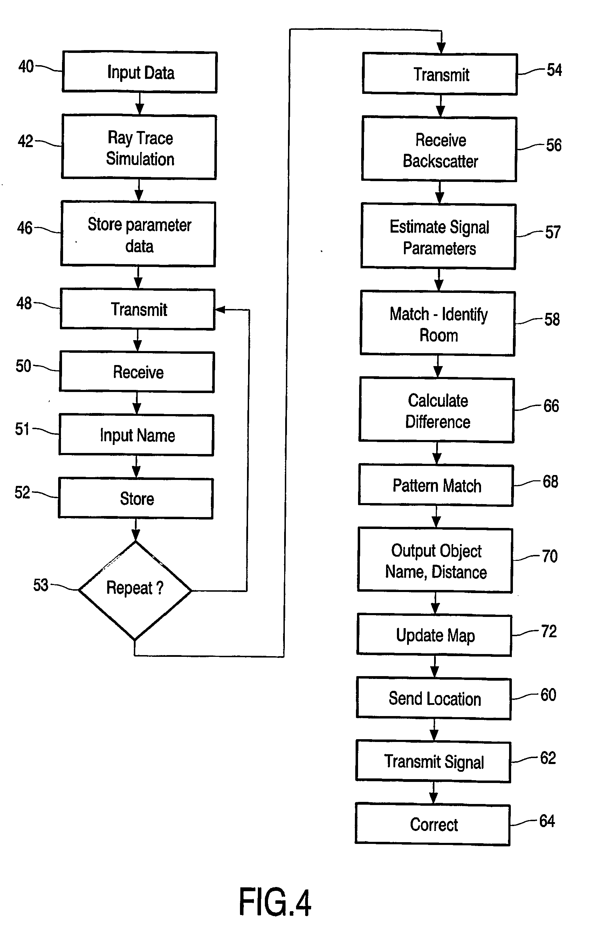

In use, (Figures 2, 3 and 4) the building plans, typical reflectivity of the building materials and details of the type of radio signal to be sent are passed to a ray-tracing simulator 32 (step 40). Next, the ray-tracing simulator 32 calculates (step 42) the expected received signal for a signal transmitted from the same radio station in each of a number of bins, i.e. areas 4, of building 2. That is to say, the amplitude, phase and delay of backscattered signal components 8 reflected from the signal 6 are calculated.

Although the diagram shows a grid similar in size to the rooms, for clarity, a real grid may be on a much finer scale to allow more precise location. For example, the grid may divide the building into square or rectangular areas with sides in the range 0.1m to 2m, preferably 0.5m to 1 m. Square grids may be most convenient in many situations. The simulator determines the amplitude, phase and delay of each expected reflected signal component returning to the radio receiver after being reflected off corresponding reflectors.

The calculation and storage steps are then repeated for each area 4 of the building to build up the complete parameter database 36.

The results of the calculations are then input into the first and second radio stations and stored as part of the parameter database 36 for that area 4 (step 46). In the specific embodiment described, information regarding the ten most significant (i.e. strongest) signal components 8 are stored, though this number may be varied as required.

After these preparation steps, and other preparation steps described below, the radio station 10, 20 sends out (step 54) a location signal 6. This is scattered in the real building and reflected back-scattered components 8 are received back at the radio station 10 and picked up by the antenna 18, 28 (step 56), called a received signal.

Next (step 57) the radio station 10, 20 calculates the amplitude phase and delay of the received back-scattered components 8. This calculation may be done in any of a number of ways, for example using a maximum likelihood estimate. The amplitude, phase and delay of the back-scattered components 8 of the received signal are then compared (step 58) with the calculated values stored in the parameter database 36 to determine the best match. The area 4 corresponding to the best match is then taken to be the area 4 in which the radio station 10, 20 is located.

As a result of this procedure being carried out in both radio stations 10,20, each knows its own location.

One or both of the radio stations 10,20 can then send (step 60) information regarding its own location to the other. In the first embodiment, a longer wavelength signal is used to transmit this information than that used for position determination, since a longer wavelength signal is less susceptible to being absorbed by materials, other than metal reflectors, preventing any transmission of the line of sight signal.

The radio stations 10, 20 are also able to build up an object database 37. To build up the object database 37, the radio station 10, 20 is brought adjacent to an object and transmits a signal through the multiple antennas (step 48). This is then reflected off the object and a reflected signal received (step 50). The use of multiple antennas allows the reflected signal to represent not merely the reflectivity and distance of the object but also its size and shape. The user is prompted (step 51) to input the object name, and this is stored (step 52) in the object database together with the reflectivity size and shape information. Steps 48 to 52 are then repeated (step 53) to build up an object database 37 with information regarding multiple objects.

The information is then used after the room information is determined to locate adjacent objects. The received signals received in step 56 are analysed for a best fit to adjacent objects.

In a preferred arrangement, the features of the received signals are compared with those stored as the parameter data of the area that gives the best match. The differences will generally be caused by reflections of objects not in the building plan. Accordingly, the method includes (step 66) determining the differences between the features of the received signals with the features stored in the parameter database corresponding to the best match of the received signals with the parameter database, and then comparing (step 68) the differences with the objects stored in the object database to determine the size shape and distance to one or more nearby objects.

The name of the best fit object can then be output (step 70).

In a concrete example, the first radio station 10 can be a mobile telephone and the second radio station 20 can be a set of door keys equipped with a transceiver key fob. If the keys become lost, a signal can be sent from the mobile telephone 10 to the door keys 20 to cause the door keys to operate the procedure above to locate local objects. This may determine, for example, that the door keys are in the bedroom 1m from a table 80 and 2m from a table lamp 82. This information can be transmitted to the mobile telephone and displayed to allow the user of the mobile telephone to find the door keys more easily.

The differences between the calculated and measured data gives information about differences between the real environment and that in the building plans input at the start of the process to calculate the expected signals received. Thus, the differences and information about local objects can be stored in a map database 39 (step 72). The map database can then be used, for example, to determine both the room containing the door keys and the location of the door keys with respect to the objects in the room.

The differences caused by moving objects such as people should in general not be included in the map database 39. This can be achieved by checking for motion of a particular reflector and not including data from moving reflectors in the map database. Alternatively, reflectors having a reflectivity and permitivity corresponding to humans or animals can be rejected.

In a modification of the first embodiment, the object database is not built up experimentally but simply stored in the radio stations. Typical objects such as tables, chairs and floors can simply be included with typical parameters, or alternatively or additionally more specific objects known to be in the local environment can be included.

In a second embodiment, instead of the amplitude, phase and delay of the reflected signal components being measured, the backscattered signal strength of the received signal as a function of time is measured. Therefore, in this embodiment, the calculation and storage steps 42,44 calculate the expected backscattered signal power as a function of time. The step of finding the best match then fits the received signal to the expected reflected signal power to find the best fit and hence the location of the radio station.

In a third embodiment, the first radio station 10 is a static radio station at a known position. The second radio station 20 is a mobile station that obtains information about its location and objects in its vicinity and sends the information back to the first radio station 10.

Although the preferred embodiments use radio stations 10, 20 with multiple antennas the invention is also applicable to radio stations 10, 20 with single antennas. It is more difficult to determine the size and shape of objects but this may not be necessary in all applications. One way of obtaining more information using just a single antenna is to send radio signals of different frequencies. As will be appreciated by the skilled person, this approach can also be used with multiple antennas.

The invention can also be used outdoors as well as indoors, especially where the outdoor environment is well mapped.

The invention may have applications for games played using mobile radio transmitters that can use information about the location and velocity of the player to provide information to a game server and to the player.

In the present specification and claims the word "a" or "an" preceding an element does not exclude the presence of a plurality of such elements. Further, the word "comprising" does not exclude the presence of other elements or steps than those listed.

## Claims

1. A positioning method of a radio station (10, 20), the method comprising:
providing a parameter database (36) including expected signal parameters of backscattered signals as a function of position;
providing an object database (37) including expected signal parameters of backscattered signals from a plurality of objects;
transmitting a location signal (6) from the radio station so that it undergoes multipath reflection before being received back at the radio station as a received signal (8);
measuring predetermined features of the received signal;
comparing the predetermined features of the received signal with the stored data in the parameter database to find the best match and accordingly the position of the radio station;
identifying differences between the predetermined features of the received signal and that expected from the stored data in the parameter database; and
comparing the differences with the stored data in the object database to find any good matches and accordingly to identify objects located in the vicinity of the radio station.

2. A method according to claim 1 wherein the step of providing a parameter database (36) includes:
inputting data defining a building;
dividing the building into a predetermined grid of areas (4);
calculating the expected received signal that would be received by a receiver in each of the areas when a location signal is sent from a transmitter predetermined either to be fixed to the radio receiver or to be at a predetermined location; and
storing as parameter data (36) significant features of the expected received signals corresponding to each of the areas.

3. A method according to claim 1 or 2 wherein the step of providing an object database (37) includes locating the radio station adjacent to a plurality of objects one after another, and for each object transmitting a signal, receiving a backscattered signal reflected off the object, and storing as object data the measured predetermined parameters of the received backscattered signal, for subsequent use in the step of testing the predetermined features of the received signal against stored object parameter data.

4. A method according to any preceding claim wherein:
the predetermined features are the amplitude, phase and delay of components of the received signal measured at the receiver; and
the steps of comparing the predetermined features and comparing the differences compare the measured amplitude, phase and delay with the expected signal parameters to find the best fit.

5. A method according to any of claims 1 to 3 wherein the predetermined features are the power of the received signal as a function of time forming a delay profile.

6. A method according to any preceding claim wherein the radio station (10, 20) has multiple antennas (18), and in the step of comparing the differences to the information in the object database (37) the differences are analysed to determine objects in the vicinity of the radio station (10, 20) and their distance.

7. A method of locating first and second radio stations, comprising:
finding the position of a first radio station (10) using a method according to any of claim 1 to 6;
finding the position of a second radio station (20) using a method according to any of claim 1 to 6; and
transmitting a radio signal representing the position of the second radio station from the second radio station to the first radio station.

8. A radio station (10, 20) comprising:
at least one antenna (18, 28);
a transceiver (12, 22);
a processor (14, 24); and
a memory (16, 26) storing a parameter database (36) including expected signal parameters of backscattered signals as a function of position within the building; and an object database (37) including expected signal parameters of backscattered signals from a plurality of objects;
wherein the memory includes code (30) arranged to cause the radio station:
to transmit a location signal from the at least one antenna so that it undergoes multipath reflection before being received at the receiver as a received signal;
to measure predetermined features of the received signal;
to compare the predetermined features with the stored data in the parameter database to find the best match and accordingly the position of the radio station;
to identify differences between the predetermined features of the received signal and that expected from the stored data in the parameter database; and
to compare the differences with the stored data in the object database (37) to find any good matches and accordingly to identify objects located in the vicinity of the radio station.

9. A radio station according to claim 8 comprising
a plurality of antennas (18, 28) for transmitting simultaneously multiple radio signals.

10. A radio system comprising a plurality of radio stations (10, 20) according to claim 9 or 10 arranged to communicate with one another.

## Patentansprüche

1. Positionierverfahren einer Funkstation (10, 20), das Verfahren umfassend:
Bereitstellen einer Parameterdatenbank (36), welche erwartete Signalparameter der rückgestreuten Signale als eine Funktion der Position aufweist;
Bereitstellen einer Objektdatenbank (37), welche erwartete Signalparameter der rückgestreuten Signale von mehreren Objekten aufweist;
Übertragen eines Ortssignals (6) von der Funkstation, so dass es eine Mehrwegereflexion erfährt, bevor es an der Funkstation wieder als ein Empfangssignal (8) empfangen wird;
Messen vorbestimmter Merkmale des empfangenen Signals;
Vergleichen der vorbestimmten Merkmale des Empfangssignals mit den gespeicherten Daten in der Parameterdatenbank, um die beste Übereinstimmung und dementsprechend die Position der Funkstation zu finden;
Identifizieren von Differenzen zwischen den vorbestimmten Merkmalen des Empfangssignals und denen, welche nach den gespeicherten Daten in der Parameterdatenbank erwartet werden; und
Vergleichen der Differenzen mit den gespeicherten Daten in der Objektdatenbank, um alle guten Übereinstimmungen zu finden und dementsprechend Objekte zu identifizieren, welche in der Nähe der Funkstation angeordnet sind.

2. Verfahren nach Anspruch 1, wobei der Schritt des Bereitstellens einer Parameterdatenbank (36) Folgendes aufweist:
Eingeben von Daten, welche ein Gebäude definieren;
Aufteilen des Gebäudes in ein vorbestimmtes Gitter von Bereichen (4);
Berechnen des erwarteten Empfangssignals, welches von einem Empfänger in jedem der Bereiche empfangen werden würde, wenn ein Ortssignal von einem Sender gesendet wird, welcher vorbestimmt entweder an dem Funkempfänger befestigt ist oder sich an einem vorbestimmten Ort befindet; und
Speichern deutlicher Merkmale der erwarteten Empfangssignale entsprechend jedes der Bereiche als Parameterdaten (36).

3. Verfahren nach Anspruch 1 oder 2, wobei der Schritt des Bereitstellens einer Objektdatenbank (37) ein sequenzielles Lokalisieren der Funkstation in der Nähe zu mehreren Objekten, und für jedes Objekt ein Übertragen eines Signals, ein Empfangen eines rückgestreuten Signals, welches von dem Objekt reflektiert wurde, und ein Speichern der gemessenen vorbestimmten Parameter des empfangenen rückgestreuten Signals als Objektdaten für eine nachfolgende Verwendung in dem Schritt des Prüfens der vorbestimmten Merkmale des Empfangssignals gegen gespeicherte Objektparameterdaten aufweist.

4. Verfahren nach einem der vorhergehenden Ansprüche, wobei:
die vorbestimmten Merkmale die Amplitude, die Phase und die Verzögerung der Komponenten des Empfangssignals sind, welche am Empfänger gemessen werden; und
die Schritte des Vergleichens der vorbestimmten Merkmale und des Vergleichens der Differenzen die gemessenen Amplitude, Phase und Verzögerung mit den erwarteten Signalparametern vergleichen, um die beste Übereinstimmung zu finden.

5. Verfahren nach einem der Ansprüche 1 bis 3, wobei die vorbestimmten Merkmale die Leistung des empfangenen Signals als eine Funktion der Zeit sind, welche ein Verzögerungsprofil bilden.

6. Verfahren nach einem der vorhergehenden Ansprüche, wobei die Funkstation (10, 20) mehrere Antennen (18) aufweist und bei dem Schritt des Vergleichens der Differenzen zu den Informationen in der Objektdatenbank (37) die Differenzen analysiert werden, um Objekte in der Nähe der Funkstation (10, 20) und ihre Distanz zu bestimmen.

7. Verfahren zum Lokalisieren einer ersten und einer zweiten Funkstation, umfassend:
Finden der Position einer ersten Funkstation (10) unter Verwendung eines Verfahrens nach einem der Ansprüche 1 bis 6;
Finden der Position einer zweiten Funkstation (20) unter Verwendung eines Verfahrens nach einem der Ansprüche 1 bis 6; und
Übertragen eines Funksignals, welches die Position der zweiten Funkstation repräsentiert, von der zweiten Funkstation an die erste Funkstation.

8. Funkstation (10, 20) umfassend:
mindestens eine Antenne (18, 28);
einen Sendeempfänger (12, 22);
einen Prozessor (14, 24); und
einen Speicher (16, 26), welcher eine Parameterdatenbank (36), welche erwartete Signalparameter der rückgestreuten Signale als eine Funktion der Position innerhalb des Gebäudes aufweist; und eine Objektdatenbank (37) speichert, welche erwartete Signalparameter der rückgestreuten Signale von mehreren Objekten aufweist;
wobei der Speicher Code (30) aufweist, welcher eingerichtet ist, dass die Funkstation Folgendes ausführen:
Übertragen eines Ortssignals aus der mindestens einen Antenne, so dass es eine Mehrwegereflexion erfährt, bevor es am Empfänger als ein Empfangssignal empfangen wird;
Messen vorbestimmter Merkmale des empfangenen Signals;
Vergleichen der vorbestimmten Merkmale mit den gespeicherten Daten in der Parameterdatenbank, um die beste Übereinstimmung und dementsprechend die Position der Funkstation zu finden;
Identifizieren von Differenzen zwischen den vorbestimmten Merkmalen des Empfangssignals und denen, welche nach den gespeicherten Daten in der Parameterdatenbank erwartet werden; und
Vergleichen der Differenzen mit den gespeicherten Daten in der Objektdatenbank (37), um alle guten Übereinstimmungen zu finden und dementsprechend Objekte zu identifizieren, welche in der Nähe der Funkstation angeordnet sind.

9. Funkstation nach Anspruch 8, umfassend
mehrere Antennen (18, 28) zum gleichzeitigen Übertragen mehrerer Funksignale.

10. Funksystem, umfassend mehrere Funkstationen (10, 20) nach Anspruch 9 oder 10, welche eingerichtet sind, um miteinander zu kommunizieren.

## Revendications

1. Procédé de repérage d'un poste radio (10, 20), le procédé comprenant les étapes suivantes :
fournir une base de données de paramètres (36) comprenant des paramètres de signal attendu de signaux rétrodiffusés en tant que fonction de position ;
fournir une base de données d'objets (37) comprenant des paramètres de signal attendu de signaux rétrodiffusés d'une pluralité d'objets ;
transmettre un signal d'emplacement (6) à partir du poste radio, de telle sorte qu'il subisse une réflexion par trajets multiples avant d'être reçu en retour par le poste radio en tant que signal reçu (8) ;
mesurer des caractéristiques prédéterminées du signal reçu ;
comparer les caractéristiques prédéterminées du signal reçu aux données mémorisées dans la base de données de paramètres pour trouver la meilleure concordance et en conséquence la position du poste radio ;
identifier des différences entre les caractéristiques prédéterminées du signal reçu et du signal attendu à partir de données mémorisées dans la base de données de paramètres ; et
comparer les différences aux données mémorisées dans la base de données d'objets pour trouver toutes bonnes concordances, et pour identifier en conséquence des objets situés à proximité du poste radio.

2. Procédé selon la revendication 1, dans lequel l'étape de fourniture d'une base de données de paramètres (36) comprend les étapes suivantes :
entrer des données définissant une construction ;
diviser la construction en grille prédéterminée de zones (4) ;
calculer le signal reçu attendu qui serait reçu par un récepteur dans chacune des zones quand un signal d'emplacement est envoyé par un émetteur prédéterminé devant être fixé au récepteur radio, ou devant être à un emplacement prédéterminé ; et
mémoriser en tant que données de paramètres (36) des caractéristiques significatives des signaux reçus attendus correspondant à chacune des zones.

3. Procédé selon la revendication 1 ou 2 dans lequel l'étape de fourniture d'une base de données d'objets (37) comprend la localisation du poste radio adjacent à une pluralité d'objets, les uns après les autres, et pour chaque objet la transmission d'un signal, la réception d'un signal rétrodiffusé réfléchi par l'objet, et la mémorisation en tant que données d'objet des paramètres prédéterminés mesurés du signal rétrodiffusé reçu, pour l'usage ultérieur dans l'étape de test des caractéristiques prédéterminées du signal reçu par rapport aux données de paramètres d'objet mémorisées.

4. Procédé selon l'une quelconque des revendications précédentes, dans lequel :
les caractéristiques prédéterminées sont l'amplitude, la phase et le retard des composantes du signal reçu mesuré par le récepteur ; et
les étapes de comparaison des caractéristiques prédéterminées et de comparaison des différences comparent l'amplitude, la phase et le retard mesurés aux paramètres de signal attendu pour trouver le meilleur ajustement.

5. Procédé selon l'une quelconque des revendications 1 à 3, dans lequel les caractéristiques prédéterminées sont la puissance du signal reçu en tant que fonction du temps formant un profil de retard.

6. Procédé selon l'une quelconque des revendications précédentes, dans lequel le poste radio (10, 20) a des antennes multiples (18), et dans lequel, dans l'étape de comparaison des différences par rapport aux informations dans la base de données d'objets (37), les différences sont analysées pour déterminer des objets à proximité du poste radio (10, 20), et leur distance.

7. Procédé de localisation d'un premier et d'un second postes radio, comprenant les étapes suivantes :
trouver la position d'un premier poste radio (10) en utilisant un procédé selon l'une quelconque des revendications 1 à 6 ;
trouver la position d'un second poste radio (20) en utilisant un procédé selon l'une quelconque des revendications 1 à 6 ; et
transmettre un signal radio représentant la position du second poste radio à partir du second poste radio vers le premier poste radio.

8. Poste radio (10, 20), comprenant :
au moins une antenne (18, 28) ;
un émetteur-récepteur (12, 22) ;
un processeur (14, 24) ; et
une mémoire (16, 26) mémorisant une base de données de paramètres (36) comprenant des paramètres de signal attendu de signaux rétrodiffusés en tant que fonction de position dans la construction ; et une base de données d'objets (37) comprenant des paramètres de signal attendu de signaux rétrodiffusés d'une pluralité d'objets ;
dans lequel la mémoire comprend un code (30) agencé pour amener le poste radio :
à transmettre un signal de localisation à partir de la au moins une antenne de telle sorte qu'il subisse une réflexion par trajets multiples avant d'être reçue par le récepteur en tant que signal reçu ;
à mesurer des caractéristiques prédéterminées du signal reçu ;
à comparer les caractéristiques prédéterminées aux données mémorisées dans la base de données de paramètres pour trouver la meilleure concordance et en conséquence la position du poste radio ;
à identifier des différences entre les caractéristiques prédéterminées du signal reçu et du signal attendu à partir des données mémorisées dans la base de données de paramètres ; et
à comparer les différences aux données mémorisées dans la base de données d'objets (37) pour trouver toutes bonnes concordances, et pour identifier en conséquence des objets situés à proximité du poste radio.

9. Poste radio selon la revendication 8, comprenant
une pluralité d'antennes (18, 28) pour transmettre simultanément de multiples signaux radio.

10. Système radio comprenant une pluralité de postes radio (10, 20) selon la revendication 9 ou 10, agencés pour communiquer les uns avec les autres.
